# EUROPEAN PATENT APPLICATION

(11) **EP 4 570 515 A1**
(43) Date of publication of application: **18.06.2025**
(21) Application number: 24216867.2
(22) Date of filing: 02.12.2024
(51) Int. Cl.: B60C 7/14, B29D 30/02, B60C 7/22

(54) **NON-PNEUMATIC TIRE COMPRISING CORD-REINFORCED SPOKES AND METHOD OF MANUFACTURING**

(30) Priority: 12.12.2023 US 202318536825
(71) Applicant: The Goodyear Tire & Rubber Company, Akron, OH 44316 (US)
(72) Inventor: LETTIERI, Joseph Carmine, Hudson, 44236 (US); MARTIN, Arnaud Fabrice Jean, F-54430 Réhon (FR); SPORTELLI, Francesco, 3249 Bettembourg (LU)
(74) Representative: Kutsch, Bernd

(57) **Abstract**

The invention is directed to a non-pneumatic tire comprising a radially outer circumferential band portion comprising a tread, a radially inner hub portion, and a supporting structure comprising a plurality of spokes extending between the hub portion and the circumferential band portion. At least one spoke of the plurality of spokes comprises a radially inner head portion, a radially outer foot portion, and a cord reinforcement wound between the foot portion and the head portion of the spoke. In another aspect, at least two neighboring spokes are reinforced by a common cord reinforcement extending at least from a radially outer foot portion to a radially inner head portion of said spoke, and further through the radially inner ring portion into a radially inner head portion of the neighboring spoke and further to a radially outer foot portion of the neighboring spoke. Another aspect provides a method for manufacturing such tires.

## Description

### Field of the Invention

The present invention is directed to a non-pneumatic tire comprising spokes, particularly cord-reinforced spokes. Furthermore, the present invention is directed to a method of manufacturing a non-pneumatic tire comprising cord-reinforced spokes.

### Background of the Invention

Some non-pneumatic tires comprise a supporting structure arranged between a tread band and a hub portion, wherein the supporting structure comprises a plurality of spokes. In some cases, such spokes comprise polymer material. In order to improve the durability of the spokes of non-pneumatic tires, spokes may be reinforced by cord or fiber material. While progress has been made in the provision of polymer spokes for non-pneumatic tires over the past years, significant room for improvement remains.

### Summary of the Invention

The invention relates to a non-pneumatic tire in accordance with claim 1 and to a method in accordance with claim 11.

Dependent claims refer to preferred embodiments of the invention.

In a first preferred aspect, the present invention is directed to a non-pneumatic tire comprising a radially outer circumferential band portion comprising a tread, a radially inner hub portion, and a supporting structure comprising a plurality of spokes extending between the hub portion and the circumferential band portion. At least one spoke of the plurality of spokes comprises a radially inner head portion adjacent the hub portion and a radially outer foot portion adjacent the circumferential band portion, wherein said at least one spoke further comprises a cord reinforcement wound between the foot portion and the head portion of the spoke.

In a second preferred aspect, the present invention is directed to a non-pneumatic tire comprising a radially outer circumferential band portion comprising a tread, a radially inner hub portion, and a supporting structure arranged radially between the band portion and the hub portion. Furthermore, the supporting structure comprises a radially outer ring portion, a radially inner ring portion, and a plurality of spokes extending from the radially outer ring portion to the radially inner ring portion. Still in accordance with the second aspect, each spoke has a radially inner head portion and a radially outer foot portion, wherein at least two neighboring spokes of the plurality of spokes are reinforced by a common cord reinforcement, and wherein said cord reinforcement extends at least from the radially outer foot portion of one of the two neighboring spokes within said one of the two neighboring spokes to the radially inner head portion of said one of the neighboring spokes. Moreover, said cord reinforcement further extends through the radially inner ring portion into the radially inner head portion of the other spoke of the two neighboring spokes and further within the other spoke to a radially outer foot portion of the other spoke.

In a third preferred aspect, the present invention is directed to a method of manufacturing a non-pneumatic tire, wherein the tire comprises a radially outer circumferential band portion comprising a tread, a radially inner hub portion, and a supporting structure comprising a plurality of cord-reinforced spokes extending between the hub portion and the circumferential band portion. Furthermore, said spokes have radially inner head portions and radially outer foot portions. The method comprises the steps of providing mold members for molding at least a circumferential sector of the supporting structure comprising one or more of the spokes; winding a cord reinforcement between radially outer foot portions and radially inner head portions of the one or more of the spokes in the circumferential sector of the supporting structure to be molded; and over-molding said cord reinforcement with a polymer composition to obtain the circumferential sector of the supporting structure comprising the one or more of the spokes.

In a preferred aspect of the invention, the cord reinforcement extends through a first radially outer leg of a first one of the two neighboring spokes, further through the crossing portion of the first spoke, further through a first radially inner leg of the first spoke, and into the radially inner ring portion, and from the radially inner ring portion into a first radially inner leg of a second spoke of the neighboring spokes, further through the crossing portion of the second spoke, and into a first radially outer leg of the second spoke.

In a preferred aspect of the invention, the cord reinforcement extends from the radially outer leg of the second spoke through further spokes of the tire around the tire, and the cord reinforcement further extends into a second radially inner leg of the first one of the two neighboring spokes, further through the crossing portion of the first spoke and through a second radially outer leg of the first spoke into the radially outer ring portion, and from the radially outer ring portion into a second radially outer leg of the second spoke, further through the crossing portion of the second spoke and into a second radially inner leg of the second spoke.

In a preferred aspect of the invention, the cord reinforcement extends at least two times through the crossing portion of each of the two neighboring spokes, and the cord reinforcement extends transversely to itself through the crossing portion.

In a preferred aspect of the invention, the cord reinforcement extends at least two times around the tire so as to extend through each spoke at least two times, and wherein the cord reinforcement is spatially separated from itself when passing two times through each spoke.

### Brief Description of the Drawings

The invention will be described by way of example and with reference to the accompanying drawings in which:
FIG. 1 is a schematic side-view of an embodiment of a non-pneumatic tire comprising a supporting structure in accordance with an embodiment of the present invention;
FIG. 2 is a schematic cross-section of a cord-reinforced spoke in accordance with an embodiment of the present invention;
FIG. 3 is a schematic, partially transparent cross-section of another cord-reinforced spoke in accordance with another embodiment of the present invention;
FIG. 4 is a schematic cross-section of another cord-reinforced spoke in accordance with yet another embodiment of the present invention;
FIG. 5a is a partial schematic perspective cross-section of a mold for molding a cord-reinforced spoke comprising an X-shape, in accordance with an embodiment of the present invention;
FIG. 5b is a schematic cross-section of another mold for molding a cord-reinforced spoke comprising an X-shape, in accordance with another embodiment of the present invention;
FIG. 6 is a schematic perspective view of a circumferential sector of a supporting structure which comprises a plurality of spokes according to still another embodiment of the present invention;
FIG. 7 is a schematic cross-section of the sector of the supporting structure already shown in Figure 6;
FIG. 8 is a schematic, partially transparent cross-section of a circumferential sector of a supporting structure comprising two reinforcement cords, according to another embodiment of the present invention;
FIG. 9 is a schematic cross-section of a circumferential sector of a supporting structure comprising multiple cords connecting circumferentially adjacent legs of two neighboring spokes with one another; and
FIG. 10 is another schematic cross-section of a circumferential sector of a supporting structure comprising I-shaped spokes connected and reinforced by a common cord.

### Detailed Description of Preferred Embodiments of the Invention

According to the first embodiment, a non-pneumatic tire comprises a radially outer circumferential band portion comprising a (circumferential) tread or tread portion, a radially inner (circumferential) hub portion, and a (circumferential) supporting structure comprising a plurality of spokes extending between the hub portion and the circumferential band portion, particularly along the circumferential direction. At least one spoke of the plurality of spokes comprises a radially inner head portion adjacent the hub portion and a radially outer foot portion adjacent the circumferential band portion, wherein said at least one spoke further comprises a cord reinforcement which is, preferably continuously, wound, e.g., multiple times, between the foot portion and the head portion of the spoke. In particular, the provision of a continuous extending and/or wound cord reinforcement helps to provide an advanced supporting structure, circumferential sector thereof, and/or spokes with improved durability. Spoke deformations such as plastic deformations can be reduced or avoided. Moreover, such tires, supporting structures, circumferential sectors thereof, and/or spokes can be manufactured at large scale and/or cost efficiently.

In a preferred embodiment, the spoke comprises a polymer composition. Preferably, the cord reinforcement extends within the polymer composition. Optionally, the spoke can be described as a cord-reinforced polymer composition spoke.

In still another preferred embodiment, the spoke, and/or one or more of the spokes of the supporting structure, such as a majority or all of the spokes, comprise or have a cross-section, in a plane parallel to the equatorial plane of the tire, of one or more of : X-shapes, V-shapes, C-shapes, I-shapes, H-shapes, O-shapes, S-shapes, Y-shapes, half-X-shapes, and one or more of bent and kinked shapes/forms of the aforementioned shapes. Preferably, the shape is an X-shape, such as a straight or bent X-shape. Another preferred shape is a half X-shape, particularly corresponding to the shape of an X essentially cut in the radial direction. It is also possible to mention such a shape as an angled bracket shape or chevron shape, wherein its kink is not necessarily at the radial center of the shape.

In another preferred embodiment, the spoke comprises or has an X-shaped cross-section (viewed in a plane in parallel to the equatorial plane of the tire, or a plane in parallel to the center line of the tire, or equivalent), preferably having one or more of a pair of radially outer legs, a pair of radially inner legs, and a crossing portion connecting the pair of radially outer legs with the pair of radially inner legs. Preferably, the spoke also has one or more of a radially inner connecting portion connecting radially inner ends of the radially inner legs, and a radially outer connecting portion connecting radially outer ends of the radially outer legs, such as in the circumferential direction. It is emphasized that it is possible that the X-shape may be curved, straight, symmetric, or asymmetric. In particular, one or more of said legs may comprise one or more of straight, kinked, and curved shapes, e.g., in said cross-section.

In still another preferred embodiment, the cord reinforcement at least extends from a radially inner end of one of the radially inner legs through said one of the radially inner legs, further through the crossing portion into one of the radially outer legs, further through said one of the radially outer legs to a radially outer end portion of the one of the radially outer legs, and optionally further through the radially outer connecting portion to the radially outer end portion of another leg of the pair of radially outer legs. Also optionally, the cord reinforcement further extends through said another leg of the pair of radially outer legs towards and/or further through the crossing portion into another leg of the pair of radially inner legs. As further option, the cord reinforcement further extends to a radially inner end portion of said another leg of the pair of radially inner legs. Such a configuration is particularly durable.

In still another preferred embodiment, the cord reinforcement passes or runs at least two times through the crossing portion. Optionally, the cord reinforcement extends transversely to itself and/or spaced apart (with respect to the axial direction) from itself through the crossing portion. Optionally, the cord reinforcement consists of at least one cord and/or a cord reinforced tape. Such an option may also apply to other embodiments herein.

In still another preferred embodiment, the spoke comprises a polymer composition comprising one or more of an elastomer composition (preferably, a rubber composition) and a thermoplastic polymer, which is optionally reinforced by the cord reinforcement, such as at least one cord.

In still another preferred embodiment, the polymer may be one or more of: i) one or more polyamide polymers (such as PA-12, PA-11, PA-6); ii) one or more thermoplastic polymers such as thermoplastic polyester elastomers, thermoplastic polyurethane elastomers, polyamide thermoplastic elastomers, elastomer alloy thermoplastic vulcanizates, thermoplastic polyolefin elastomers, styrenic thermoplastic elastomers, thermoplastic resins (such as polyester resins, polyamide resins, or polyurethane resins). In particular, the term thermoplastic polymer shall include herein also thermoplastic resins.

In still another preferred embodiment, the thermoplastic polymer is a thermoplastic elastomer, such as a thermoplastic polyester elastomer.

In another preferred embodiment, the polymer composition is an elastomer composition, such as a rubber composition. Optionally, said elastomer composition (such as the rubber composition) comprises one or more of rubber (such as comprising one or more of natural rubber, synthetic polyisoprene, butadiene rubber, styrene-butadiene rubber, and butyl rubber), a filler (such as comprising one or more of carbon black and silica), resin (such as a hydrocarbon resin selected from one or more of coumarone-indene resins, petroleum hydrocarbon resins, terpene resins, styrene/alphamethylstyrene resins, terpene phenol resins, rosin derived resins and copolymers and/or mixtures thereof), accelerators, antidegradants, oils, liquid diene-based polymers, coupling agents (such as carbon black coupling agents and/or silanes), sulfur donors, and sulfur. Liquid means herein that a material is in a liquid state at 23°C. The composition may be a sulfur-curable or sulfur-cured rubber composition. Optionally, elastomer compositions, such as rubber compositions may be fiber reinforced.

In still another preferred embodiment, the elastomer composition or rubber composition comprises 100 phr of rubber comprising one or more of natural rubber, synthetic polyisoprene, polybutadiene rubber, and styrene butadiene rubber. Preferably, the composition comprises at least 50 phr of natural rubber (such as from 50 phr to 100 phr of natural rubber), and optionally from 0 phr (or 5 phr) to 50 phr of polybutadiene rubber. Additionally, the elastomer or rubber composition comprises a filler, preferably comprising carbon black and/or silica. For instance, such filler may be within a range of 20 phr to 150 phr, preferably within a range of 30 phr to 90 phr. Preferably, such a filler comprises predominantly carbon black. The elastomer or rubber composition may further comprise from 1 phr to 40 phr of resin, preferably including a phenolic resin. Moreover, the elastomer or rubber composition may comprise from 1 phr to 30 phr of oil, preferably from 1 phr to 20 phr of oil. Finally, the elastomer or rubber composition may typically comprise from 1 phr to 15 phr of antidegradant(s), from 0.5 phr to 10 phr of accelerator(s), from 0.1 phr to 10 phr of zinc oxide, and from 0.5 phr to 10 phr of sulfur. Further ingredients may also be present.

In still another preferred embodiment, the spoke may comprise multiple polymer compositions such as multiple layers or portions of such compositions.

In still another preferred embodiment, the cord reinforcement is selected from one or more of: i) at least one cord, ii) at least one cord-reinforced tape, and iii) at least one fabric comprising cords. In one option, the cord reinforcement comprises or consists of at least one cord. Preferably, a cord is one of a multifilament cord and a monofilament cord. In another option, a cord-reinforced tape comprises multiple essentially parallel cords, optionally embedded in and/or connected by a polymer composition, such as a resin composition, which may comprise one or more of polyester, vinyl ester, polyurethane, and epoxy, to form the tape. In another option, said fabric may comprise a plurality of, preferably interconnected, essentially parallel cords. Optionally, these cords may form warp cords and/or weft cords of the fabric.

In still another preferred embodiment, the cord reinforcement, particularly one or more cords of the cord reinforcement, comprise or consist of one or more of textile material, glass fiber material, carbon fiber material, boron fiber material, basalt fiber material, plant-based material, and combinations of these materials. Optionally, multiple cords comprise different materials and/or are hybrid cords of such different materials. Optionally, said plant-based material comprises one or more of cotton, hemp, flax, sisal, and bast.

In still another preferred embodiment, the cord reinforcement, particularly one or more cords of the cord reinforcement, comprise or consist of metal, such as steel or brass-coated steel.

In still another preferred embodiment, the cord reinforcement, particularly one or more cords of the cord reinforcement, comprise or consist of a textile material selected from one or more of polyester (preferably, PET), polyamide (preferably, one or more of PA-6, PA-6,6, e.g., Nylon^{™}, aromatic polyamide / aramid), and rayon. Optionally, one or more of these materials may be recycled materials. Optionally, multiple cords comprise different materials and/or are hybrid cords of such different materials.

In another preferred embodiment, one or more cords provided herein are one of single filament and multifilament cords. For instance, cords may have (maximum) diameters measured perpendicular to the extension of the cord in the spoke within a range of 0.01 mm to 2 mm, preferably within a range of 0.01 mm to 1 mm.

In still another preferred embodiment, the cord reinforcement is wound multiple times between the foot portion and the head portion, and/or multiple passes of the cord reinforcement between the foot portion and the head portion are spatially (and/or axially) separated from one another between the foot portion and the head portion. It is remarked that winding or passing of the cord reinforcement between the foot portion and the head portion shall not exclude that the cord reinforcement is wound and/or passes through said portions. Optionally, the cord reinforcement passes through said portions, or multiple cord reinforcements pass through said portions.

According to the second embodiment, the present invention is directed to a non-pneumatic tire comprising a radially outer circumferential band portion comprising a (circumferential) tread or tread portion, a radially inner (circumferential) hub portion, and a supporting structure arranged radially between the band portion and the hub portion. Furthermore, the supporting structure comprises a radially outer (circumferential) ring portion, a radially inner (circumferential) ring portion, and a plurality of spokes extending from the radially outer ring portion to the radially inner ring portion, preferably along the circumferential direction. Still in accordance with the second aspect, each spoke has a radially inner head portion and a radially outer foot portion, wherein at least two (circumferentially) neighboring spokes of the plurality of spokes are reinforced by a common cord reinforcement, and wherein said cord reinforcement extends at least from the radially outer foot portion of one of the two neighboring spokes within the spoke to the radially inner head portion of said one of the neighboring spokes. Moreover, said cord reinforcement further extends through the radially inner ring portion into the radially inner head portion of the other spoke of the neighboring spokes and further within the other spoke to a radially outer foot portion of the other spoke. Thus, such neighboring spokes and the respective ring portion are reinforced by a common cord reinforcement, which improves the durability of the supporting structure or a circumferential sector thereof. Deformations of the supporting structure and/or spoke deformations such as plastic deformations can be reduced or avoided. Moreover, such tires, supporting structures, and/or spokes can be manufactured at large scale.

In a preferred embodiment, the cord reinforcement extends through and/or reinforces a majority of the spokes of the tire.

In another preferred embodiment, the cord reinforcement extends through multiple spokes along a circumferential sector of the tire and/or supporting structure or circumferential sector thereof.

In another preferred embodiment, the cord reinforcement extends through at least 3, 4, 5, or 6 spokes of the tire and/or supporting structure or circumferential sector thereof.

In still another preferred embodiment, the cord reinforcement extends at least two times around the tire so as to extend through each spoke at least two times. Preferably, when extending through the same spoke a second time, the cord reinforcement is axially spaced from itself in this spoke, such as being separated by a polymer composition of the spoke. Optionally, the cord reinforcement consists of at least one cord and/or a cord-reinforced tape.

In still another preferred embodiment, the cord reinforcement extends multiple times between two circumferential end portions of a circumferential sector of the supporting structure, optionally passing multiple times (e.g., two times) through each spoke in the sector.

In still another preferred embodiment, two neighboring spokes comprise each an X-shaped cross-section having one or more of a pair of radially outer legs, a pair of radially inner legs, and a crossing portion connecting the pair of radially outer legs with the pair of radially inner legs.

In still another preferred embodiment, the cord reinforcement extends through one or more of a first radially outer leg of a first one of the two (circumferentially) neighboring spokes, further through the crossing portion of the first spoke, further through a first radially inner leg of the first spoke, and into the radially inner ring portion, and optionally from the radially inner ring portion into a first radially inner leg of a second spoke of the neighboring spokes and further through the crossing portion of the second spoke and into a first radially outer leg of the second spoke.

In still another preferred embodiment, the cord reinforcement (further) extends from the radially outer leg of the second spoke through further spokes of the tire, optionally, around the tire. Preferably, the cord reinforcement extends into a second radially inner leg of the first one of the two neighboring spokes, further through the crossing portion of the first spoke and through a second radially outer leg of the first spoke into the radially outer ring portion, and from the radially outer ring portion into a second radially outer leg of the second spoke, further through the crossing portion of the second spoke and into a second radially inner leg of the second spoke.

In still another preferred embodiment, the cord reinforcement extends at least two times through the crossing portion of each of the two neighboring spokes. Preferably, the cord reinforcement extends transversely to itself and/or axially spaced apart from itself through the crossing portion.

In still another preferred embodiment, the cord reinforcement extending at least two times through each spoke is spatially, such as axially, separated from itself.

According to a further aspect of the invention, a method of making or manufacturing a non-pneumatic tire is provided, wherein the tire comprises a supporting structure comprising cord-reinforced spokes, the method comprising the step of providing mold members for molding at least a circumferential sector of the supporting structure comprising one or more of the spokes. Furthermore, the method comprises the step of winding a cord reinforcement between radially outer foot portions and radially inner head portions of the one or more of the spokes in the circumferential sector of the supporting structure to be molded. Still in accordance with the third aspect, the method comprises the step of over-molding said cord reinforcement with a polymer composition to obtain the circumferential sector of the supporting structure comprising the one or more of the spokes.

Optionally, the method is used to make the tire according to the first aspect or the second aspect, and optionally in accordance with one or more respective embodiments.

In a preferred embodiment of the method, the step of winding the cord reinforcement comprises winding the cord reinforcement (e.g., supported by one or more of the mold segments) at least from one of a radially outer foot portion and a radially inner head portion of a first spoke to the other one of the radially outer foot portion and the radially inner head portion of the first spoke, and optionally further from the other one of the radially outer foot portion and the radially inner head portion of the first spoke again to the one of the radially outer foot portion and the radially inner head portion of the first spoke, and from the one of the radially outer foot portion and the radially inner head portion of the first spoke again to the other one of the radially outer foot portion and the radially inner head portion. For instance, such a step may be performed to provide a spoke according to the first aspect, or one or more of its embodiments.

In another preferred embodiment, the cord reinforcement is wound and/or supported on one or more mold members (such as mold inserts or mold core members), particularly before over-molding the cord reinforcement with the polymer composition. Directly winding the cord reinforcement on one or more mold members can provide an economical option for manufacturing. Optionally, the one or more cord reinforcements may be spaced from the surface of the mold members by one or more polymer layers.

In still another preferred embodiment, the cord reinforcement is held at a distance from one or more adjacent mold members, such as mold inserts or mold core members, by protrusions on these mold members, optionally so as to at least predominantly encapsulate the cord reinforcement along its extension by over-molding of said cord reinforcement with the polymer composition.

In still another preferred embodiment said protrusions are provided at edges of the one or more mold members. Optionally, said protrusions comprise a curved surface. Such a surface helps to avoid damaging the cord reinforcement.

In another preferred embodiment, winding the at least one cord reinforcement comprises winding the cord reinforcement from a radially outer foot portion of a first spoke to a radially inner head portion of the first spoke and from the radially inner head portion of the first spoke to a radially inner head portion of a (circumferentially) neighboring second spoke, from the radially inner head portion of the second spoke to a radially outer foot portion of the second spoke, from the radially outer foot portion of the second spoke to a radially outer foot portion of a third spoke neighboring the second spoke on a side opposite to the first spoke, e.g., along the circumferential sector of the supporting structure. For instance, such an embodiment may be used to manufacture a tire, a supporting structure, or a circumferential sector (e.g., as such), such as according to the second aspect of the present invention, or one or more of its embodiments.

In still another preferred embodiment, the supporting structure, or at least a circumferential segment or sector of the supporting structure, is manufactured, e.g., separately manufactured, by the method. For example, the supporting structure, or a circumferential sector thereof, preferably comprising multiple spokes, can be formed in a mold ring defining the shape of the supporting structure. In case of manufacturing a circumferential segment or sector of the supporting structure, such a segment or sector can, e.g., be manufactured with a corresponding ring segment or ring sector shaped mold.

In still another preferred embodiment, the method comprises winding the cord reinforcement through further spokes of the tire around the tire and/or the circumferential sector of the supporting structure.

In still another preferred embodiment, the cord reinforcement extends again into the first spoke after winding the cord through said further spokes of the supporting structure around the tire.

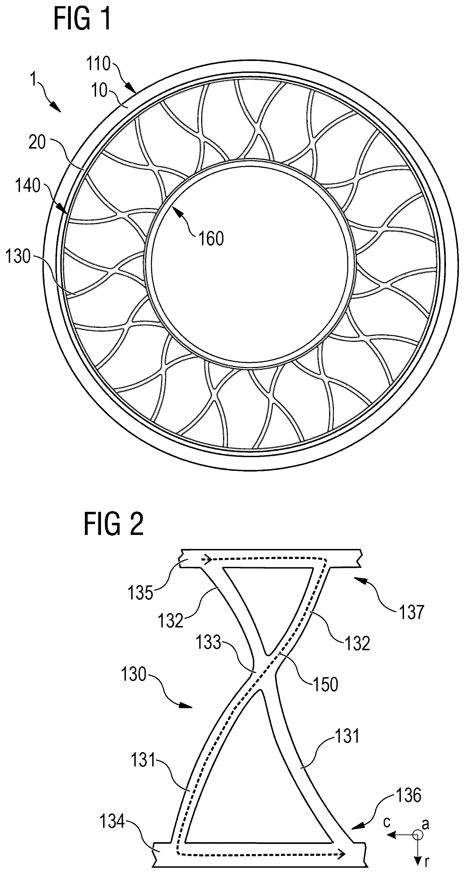

Figure 1 shows a schematic side view of the tire 1 having a circumferential band or band portion 110 comprising a circumferential tread or tread portion 10 carried by a circumferential shearband 20. Furthermore, the tire 1 has a circumferential hub portion 160 wherein the circumferential band portion 110 and/or its shearband 20 is supported on the hub portion 160 by a supporting structure 140 comprising a plurality of spokes 130 along a circumferential direction. In the present embodiment, said spokes 130 comprise bent X-shapes.

One of these spokes 130 is shown in detail in Figure 2. The depicted spoke 130 comprises a pair of radially outer legs 131, a pair of radially inner legs 132, and the crossing portion 133 connecting both pairs of legs 131, 132 with each other. Furthermore, the radially outer legs 131 are connected by a radially outer connecting portion 134, and the radially inner legs 132 are connected by a radially inner connecting portion 135. The spoke 130 is reinforced by at least one cord 150 which is wound between the radially inner head portion 137 and the radially outer foot portion 136, here essentially in a Z-shaped winding pattern. In particular, in the present embodiment, the cord 150 is wound through and from the connecting portion 135 through one of the radially inner legs 132, further through the crossing portion 133, further through one of the radially outer legs 131, and further into and through the connecting portion 134.

In multiple embodiments and/or Figures herein, the circumferential direction c, the axial direction a, and the radial direction r, are indicated for better orientation. The circumferential direction c is perpendicular to the axial direction a. The same applies to the radial direction r. The axial direction a is parallel to the axis of rotation of the tire. Such directions mentioned herein are not necessarily limited to a specific orientation of the given direction, unless otherwise described herein.

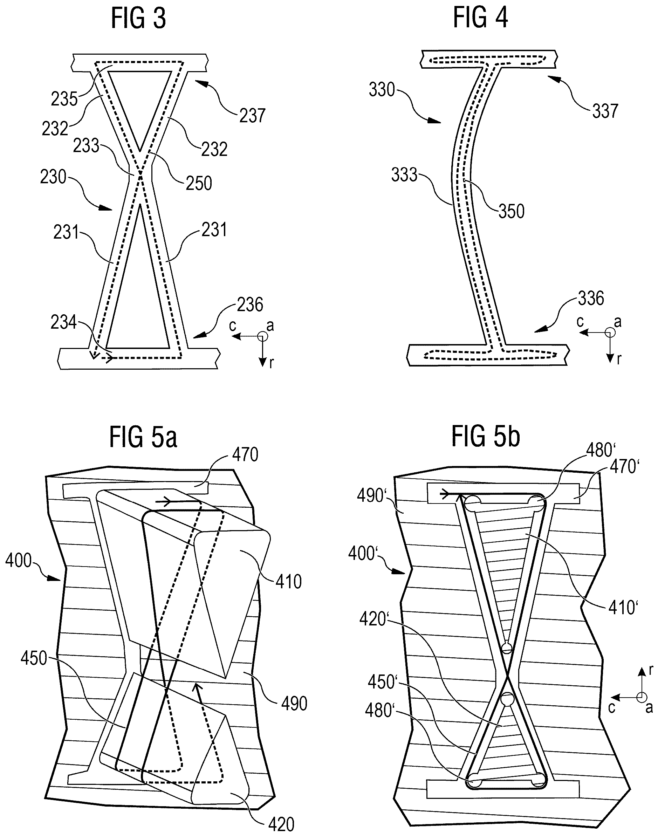

In the schematic cross-section of Figure 3, another spoke 230 of a supporting structure in accordance with an embodiment of the present invention is shown. The spoke 230 comprises a straight X-shape. In other words, the radially inner legs 232 of the pair of radially inner legs 232 and the radially outer legs 231 of the pair of radially outer legs 231 extend straightly. Both pairs of legs 231, 232 are connected radially between them by the crossing portion 233. Moreover, the pair of radially inner legs 232 is connected at a radially inner portion by a radially inner connecting portion 235. Similarly, the pair of radially outer legs 231 is connected in a radially outer portion by a radially outer connecting portion 234. The spoke 230 is cord-reinforced by a cord 250 which is wound from the radially outer connecting portion 234 through one of the radially outer legs 231, through the crossing portion 233, and further through one of the radially inner legs 232 into the radially inner connecting portion 235, further into the second one of the radially inner legs 232, again into the crossing portion 233, from there into the second one of the radially outer legs 231, and into the radially outer connecting portion 234. Furthermore, in the present embodiment, the cord 250 crosses itself transversally in the crossing portion 233. Preferably, the cord 250 crosses itself with a distance from itself in the crossing portion 233, particularly separated in an axial direction. While not shown in the embodiment of Figure 3, it is possible that the cord is wound multiple times between the foot portion 236 and the head portion 237 of the spoke 230. A similar option is shown in Figure 5a discussed herein below.

Figure 4 shows yet another embodiment of a portion or circumferential segment of a supporting structure comprising a spoke 330 in accordance with another embodiment of the present invention. This spoke 330 has a radially inner head portion 337 and a radially outer foot portion 336 which are connected by a rib portion 333. In the present embodiment, the rib portion 333 is bent or curved in the circumferential direction. However, in similar embodiments it is also possible that the cross-section of the rib portion 333 is straight or kinked (not shown in the present embodiment). In the cross-section shown in Figure 4, a cord 350 is wound between the radially inner head portion 337 and the radially outer foot portion 336. Thus, in the present embodiment, the cord runs twice through and/or extends twice over the radial height of the rib portion 333. Similarly, it is possible to mention that a cord reinforcement at least extends twice over and/or at least runs twice through the radial height of a spoke in other embodiments disclosed herein, such as comprising X-shaped cross-sectional shapes. In the embodiment of Figure 4, the cord 350 runs essentially along and through the rib portion 333. Alternatively, it could also (transversely) cross itself in the rib portion 333. Preferably, the cord is spaced from itself (such as in one or more of the axial direction and the circumferential direction) when extending at least two times through the rib portion 333.

Figure 5a shows an embodiment of manufacturing a circumferential sector of a supporting structure comprising an X-shaped spoke with a mold 400, wherein a cord 450 is wound multiple times between a head portion and a foot portion of the spoke to be manufactured. In particular, the embodiment shown in Figure 5a, comprises two mold inserts 410, 420 onto which the cord 450 is wound. These mold inserts 410 and 420 are axially insertable into a mold cavity 470 of the mold 400 so as to define the outer shape of the spoke to be molded. As also visible in Figure 5a, the cord 450 crosses itself multiple times in a crossing portion of the spoke and/or between both mold inserts 410, 420. Preferably, the cord 450 passes through the spoke and/or crosses itself with a distance to itself, e.g., an axial distance. In other words, preferably, the cord 450 is spaced from itself over the majority of its length or extension. When the cord 450 and the mold inserts 410, 420 are inserted in the mold cavity 470, the cord 450 can be over molded in the mold cavity 470 with a polymer composition, such as a rubber composition, or other compositions disclosed herein. In particular, it is possible that the mold 400 comprises one or more channels or passageways (not explicitly shown) for injecting polymer compositions into the mold cavity 470, or, in other words, into one or more gaps formed between the mold inserts 410, 420 and an outer mold member 490 defining the mold cavity 470 of the mold 400.

Figure 5b discloses another schematically depicted embodiment of a method for manufacturing a circumferential sector of a supporting structure and/or a spoke comprising an X-shaped cross-section with a mold 400'. As shown in the cross-section of Figure 5b, the mold 400' comprises two mold inserts 410', 420' inserted into the mold cavity 470' of an outer mold member 490' to at least partially define the outer shape of the spoke to be molded. The cord 450' is wound between both radial end portions (e.g., a head portion and a base portion of the spoke to be molded) on the mold inserts 410', 420'. In addition, to the design shown in the previous Figure 5a, the mold inserts 410', 420' comprise at their (axially extending) edges protrusions, spacers, or in other words bulges 480', which are adapted to space the cord 450' wound over the mold inserts 410', 420' away from the side surfaces of the mold inserts 410', 420'. Preferably, the cord 450' is positioned essentially centric between an adjacent surface of the respective mold insert 410', 420' and the adjacent surface of the outer mold member 490', facing the respective mold insert 410', 420'. Thus, zones in which the cord 450' might appear at the surface of the spoke may be reduced and/or avoided. Once, the cord 450' has been positioned, and optionally tensioned on the mold inserts 410', 420' in the mold cavity 470', the remaining space or gap(s) of the mold cavity 470' may be filled with one or more polymer compositions so as to over-mold the cord 450' and to form the spoke. For the sake of over-molding, the mold 400' is preferably closed at one or both of its axial and/or face sides. Furthermore, as another option, the mold 400' may have one or more inlets and/or channels for injecting one or more polymer compositions into the mold cavity 470'. It is also possible to inject different polymer compositions so as to provide the spoke with more than just one polymer composition over one or more of its width, height, and length. The same applies also to the previous embodiment.

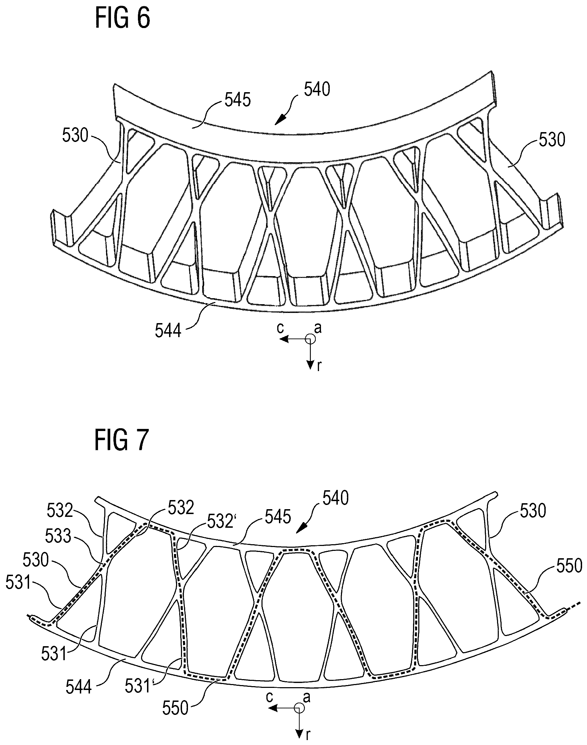

Figure 6 shows a schematic perspective view of a circumferential sector of a supporting structure 540 comprising six spokes 530 radially extending between a radially inner ring portion 545 and a radially outer ring portion 544. In the present embodiment, each spoke comprises an X-shaped cross-section, in a plane in parallel to an equatorial plane of the tire or circumferential centerline of the tire, respectively. For instance, it is possible to manufacture multiple of such circumferential sectors 540 of the supporting structure. Such sectors 540 may be assembled later to form a full circumferential supporting structure. In particular, it is possible that such sectors 540 are molded, e.g., with unvulcanized rubber compositions and cured or co-cured later together with further sectors so as to form a (full) ring-shaped supporting structure. It is also possible, that other unvulcanized components of the non-pneumatic tire are assembled with the supporting structure or sectors thereof and co-cured together later. In addition, or alternatively, it is possible to use adhesives to attach and/or connect multiple parts and/or components of the tire, as known as such to the person skilled in the art. The sector 540 shown in Figure 6 is reinforced with one or more cords (extending inside the spokes 530 and not visible in the perspective view of Figure 6).

In this context, Figure 7 shows a schematic cross-section of the sector of Figure 6, wherein a cord 550 extends from one circumferential end of the sector 540 to a second circumferential end of the sector 540 through multiple (herein all) spokes 530. In particular, the cord 550 extends from the left-hand side, or in other words from a first circumferential end of the radially outer ring portion 544 through the first leg 531 of the spoke 530, further through its crossing portion into its radially inner leg 532 and further into the radially inner ring portion 545. From there, it extends into a radially inner leg 532' of the second adjacent or neighboring spoke, further into its crossing portion, and into one of its radially outer legs 531' and then continuously into the radially outer ring portion 544. As visible in Figure 7, such a cord trajectory through the spokes 530 is continued along the circumferential sector 540. Thereby, neighboring spokes 530 are interconnected by the same cord 550, which can significantly improve the durability of the supporting structure and/or its spokes 530. It also improves the connection between both ring portions 545, 544 and the adjacent spokes 530 connecting these ring portions 545, 544.

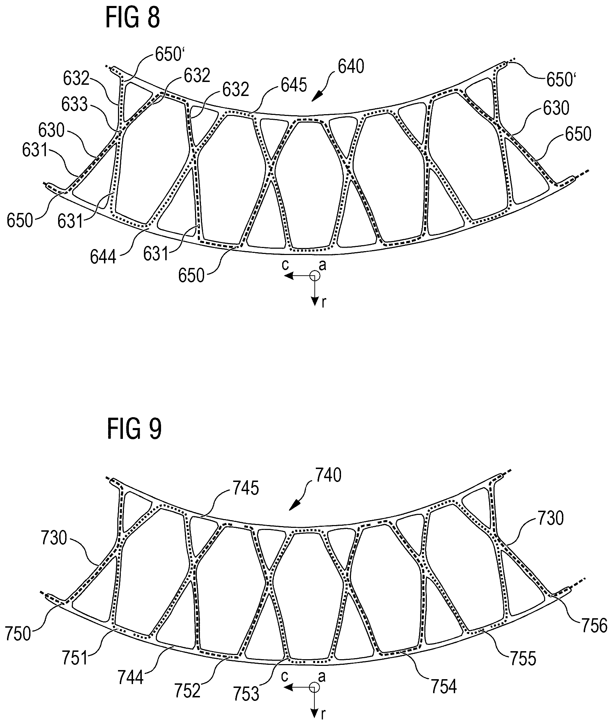

Figure 8 shows an alternative embodiment of a segment similar to that already shown in Figure 7. According to Figure 8, the supporting structure segment or sector 640 comprises two cords 650, 650'. The depicted sector 640 comprises multiple spokes 630 which connect a radially inner ring portion 645 and a radially outer ring portion 644. The cord 650 extends through the sector 640 in a similar manner as the cord 550 in the previous embodiment of Figure 7. However, in addition cord 650' of Figure 7 also extends through the sector 640. In the present nonlimiting embodiment, cord 650'extends from a radially inner ring portion 645 through a radially inner leg 632 of a first spoke 630, through its crossing portion 633 into its radially outer leg portion 631, further into the radially outer ring portion 644, from this ring portion 644 into a radially outer leg of neighboring further spoke 630, from this neighboring radially outer leg through the crossing portion of the neighboring spoke 630, and from that crossing portion and through a radially inner leg towards the radially inner ring portion 645 of the sector 640. It is noted, that the cord 650 and the cord 650' cross each other in each of the spokes 630 (particularly in the crossing portion), preferably with an axial distance between each other. Such an arrangement of cords 650, 650' helps to significantly improve the durability of the sector 640 of the supporting structure. Optionally, but not shown herein, it is possible to use just a single cord to achieve a similar effect. In particular, such a cord could run or extend back in the same sector or could extend multiple times within the sector of the supporting structure.

Another embodiment of a supporting structure, or only a circumferential segment or sector 740 thereof, is shown in Figure 9. The geometry of the sector 740 is similar to the geometry of the sectors already shown in Figures 7 and 8. However, in contrast to these previous embodiments, sector 740 according to Figure 9 comprises a plurality of cords, i.e. the cords 750, 751, 752, 753, 754, 755, and 756. In particular, such cords form essentially ring-shaped cord reinforcements connecting and/or reinforcing circumferentially neighboring legs of neighboring spokes 730 with each other. In the embodiment depicted in Figure 9, two separate cords pass each crossing portion of the respective spoke. In particular, these two cords are circumferentially separated from each other. However, it is also possible that these two cords are axially separated and overlap or cross in the circumferential direction. Considering one of the cords, such as the cord 751, the cord 751 extends from the radially outer ring portion 744 into a radially outer leg of an adjacent spoke further through the adjacent crossing portion, and further towards the radially inner ring portion 745 by passing through the radially inner leg, and from the radially inner ring portion 745 through a radially inner leg of a neighboring spoke, further into the crossing portion of the same spoke, further into the radially outer leg of the same spoke, and back into the radially outer ring portion 744 towards its opposite end portion.

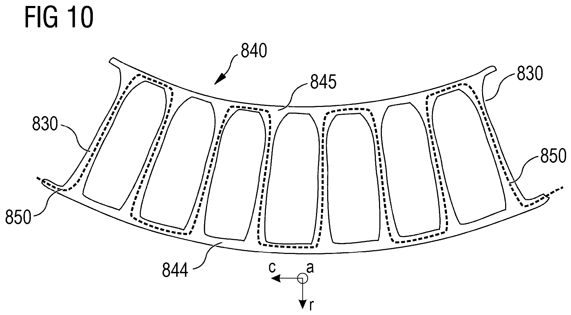

Figure 10 shows yet another embodiment of a circumferential sector 840 of a supporting structure, wherein the sector 840 comprises I-shaped spokes 830. These spokes 830 extend between a radially inner ring portion 845 and a radially outer ring portion 844 so as to support the radially outer ring portion 844 on the radially inner ring portion 845. According to the present embodiment, cord 850 extends through multiple (such as all) spokes 830, e.g., as shown here in an undulating path between both ring portions 845, 844. Thus, each of the spokes 830 is reinforced by the same cord 850 which supports the whole stability and durability of the sector 840 of the supporting structure.

While not shown in the embodiments herein above, another embodiment consists in that multiple circumferential rows of spokes are provided axially besides one another, such as two, three or four of such rows. From row to row, circumferential positions of such spokes could be the same or circumferentially shifted.

Molds, mold inserts and/or mold members are provided preferably with one or more temperature resistant materials, such as having a melting point higher than 200°C, preferably higher than 300°C. Plastic, ceramic or metal materials are non-limiting examples for such mold materials.

In summary, the present invention and its embodiments provide durable spokes, durable sectors of supporting structures, and/or durable supporting structures. Potential plastic deformations of the spokes can be avoided or at least reduced. Cord reinforcements can be placed in a determined manner and/or allow for large-scale production, particularly in a cost-efficient manner.

It is emphasized that the aspects, embodiments and features thereof as disclosed herein may be combined with one another.

## Claims

1. A non-pneumatic tire comprising:
a radially outer circumferential band portion comprising a tread;
a radially inner hub portion; and
a supporting structure comprising a plurality of spokes extending between the hub portion and the circumferential band portion;
wherein at least one spoke of the plurality of spokes comprises a radially inner head portion adjacent the hub portion and a radially outer foot portion adjacent the circumferential band portion, and
wherein the spoke comprises a cord reinforcement wound between the foot portion and the head portion of the spoke.

2. The non-pneumatic tire according to claim 1, wherein the spoke comprises a polymer composition and wherein the cord reinforcement extends within the polymer composition.

3. The non-pneumatic tire according to claim 1 or 2, wherein the spoke comprises an X-shaped cross-section, having a pair of radially outer legs, a pair of radially inner legs, a crossing portion connecting the pair of radially outer legs with the pair of radially inner legs, a radially inner connecting portion connecting radially inner ends of the radially inner legs, and a radially outer connecting portion connecting radially outer ends of the radially outer legs.

4. The non-pneumatic tire according to claim 3, wherein the cord reinforcement at least extends from a radially inner end of one of the radially inner legs through said one of the radially inner legs, further through the crossing portion into one of the radially outer legs, further through said one of the radially outer legs to a radially outer end portion of the one of the radially outer legs, further through the radially outer connecting portion to the radially outer end portion of another leg of the pair of radially outer legs, further through said another leg of the pair of radially outer legs towards and through the crossing portion into another leg of the pair of radially inner legs, and further to a radially inner end portion of said another leg of the pair of radially inner legs.

5. The non-pneumatic tire according to at least one of the previous claims, wherein the cord reinforcement passes at least two times through the crossing portion, and wherein the cord reinforcement extends transversely to itself in the crossing portion.

6. The non-pneumatic tire according to at least one of the previous claims, wherein the spoke comprises one or more polymer compositions selected from one or more of thermoplastic compositions and elastomer compositions, reinforced by the cord reinforcement; and wherein the cord reinforcement comprises at least one cord comprising one or more of textile material, glass fiber material, carbon fiber material, boron fiber material, basalt fiber material, plant-based material, and combinations of these materials.

7. The non-pneumatic tire according to at least one of the previous claims, wherein the cord reinforcement is wound multiple times between the foot portion and the head portion of the spoke and wherein multiple passes of the cord reinforcement between the foot portion and the head portion are spatially separated from one another between the foot portion and the head portion.

8. The non-pneumatic tire according to at least one of the previous claims, wherein the supporting structure comprises a radially outer ring portion, a radially inner ring portion, and a plurality of spokes extending from the radially outer ring portion to the radially inner ring portion, wherein each of the spokes has a radially inner head portion and a radially outer foot portion, and wherein at least two neighboring spokes of the plurality of spokes are reinforced by a common cord reinforcement, wherein said cord reinforcement extends at least from the radially outer foot portion of one of the two neighboring spokes within the one of the two neighboring spokes to the radially inner head portion of said one of the neighboring spokes, and further through the radially inner ring portion into the radially inner head portion of the other spoke of the neighboring spokes and further within the other spoke to a radially outer foot portion of the other spoke.

9. The non-pneumatic tire according to at least one of the previous claims, wherein the cord reinforcement extends through and reinforces a majority of the spokes of the tire and/or wherein the cord reinforcement extends at least through four neighboring spokes in a circumferential sector of the supporting structure.

10. The non-pneumatic tire according to at least one of the previous claims, wherein the two neighboring spokes have each an X-shaped cross-section having a pair of radially outer legs, a pair of radially inner legs, and a crossing portion connecting the pair of radially outer legs with the pair of radially inner legs.

11. A method of manufacturing a non-pneumatic tire, the tire comprising a radially outer circumferential band portion comprising a tread, a radially inner hub portion, and a supporting structure comprising a plurality of cord-reinforced spokes extending between the hub portion and the circumferential band portion, wherein said spokes have radially inner head portions and radially outer foot portions; and wherein the method comprises the steps of:
providing mold members for molding at least a circumferential sector of the supporting structure comprising one or more of the spokes;
winding a cord reinforcement between radially outer foot portions and radially inner head portions of the one or more of the spokes in the circumferential sector of the supporting structure to be molded; and
over-molding said cord reinforcement with a polymer composition to obtain the circumferential sector of the supporting structure comprising the one or more of the spokes.

12. The method according to claim 11, wherein the step of winding the cord reinforcement comprises winding the cord reinforcement at least from one of a radially outer foot portion and a radially inner head portion of a first spoke to the other one of the radially outer foot portion and the radially inner head portion of the first spoke, and further from the other one of the radially outer foot portion and the radially inner head portion of the first spoke again to the one of the radially outer foot portion and the radially inner head portion of the first spoke, and from the one of the radially outer foot portion and the radially inner head portion of the first spoke again to the other one of the radially outer foot portion and the radially inner head portion.

13. The method according to claim 11 or 12 wherein winding the at least one cord reinforcement comprises winding the cord reinforcement from a radially outer foot portion of a first spoke to a radially inner head portion of the first spoke and from the radially inner head portion of the first spoke to a radially inner head portion of a neighboring second spoke, from the radially inner head portion of the second spoke to a radially outer foot portion of the second spoke, from the radially outer foot portion of the second spoke to a radially outer foot portion of a third spoke neighboring the second spoke on a side opposite to the first spoke along the circumferential sector of the supporting structure.

14. The method according to at least one of the claims 11 to 13, wherein the method comprises winding the cord reinforcement through further spokes of the supporting structure around the tire.

15. The method according to at least one of the claims 11 to 14, wherein the cord reinforcement extends again into the first spoke after winding the cord reinforcement through the further spokes of the supporting structure around the tire.
